# EUROPÄISCHE PATENTANMELDUNG

(11) **EP 3 846 055 A1**
(43) Veröffentlichungstag der Anmeldung: **07.07.2021**
(21) Anmeldenummer: 20150023.8
(22) Anmeldetag: 02.01.2020
(51) Int. Cl.: G06F 21/50, G06F 21/57, H04L 29/06, G06F 21/44

(54) **VERFAHREN ZUM INTEGRATIONSSCHUTZ EINES GERÄTES**

(71) Anmelder: Siemens Aktiengesellschaft, 80333 München (DE)
(72) Erfinder: Falk, Rainer, 85586 Poing (DE)

(57) **Zusammenfassung**

Verfahren zum Integritätsschutz eines Gerätes (10) umfassend die Verfahrensschritte:
- Erstellen (S1) eines Cachespeicherablaufprofils (CP) einer Cachespeichereinheit (20) während der Laufzeit des Geräts (10), wobei das Cachespeicherablaufprofil (CP) einen zeitlichen Ablauf von aufeinanderfolgend erfassten Cachespeicherprozessen der Cachespeichereinheit (16) enthält,
- Ermitteln (S2) eines Prüfergebnisses durch Vergleichen des Cachespeicherablaufprofils (CP) mit mindestens einem Referenzprofil (RP), wobei ein negatives Prüfergebnis ermittelt wird, wenn das Cachespeicherablaufprofil (CP) nicht mit dem Referenzprofil (RP) übereinstimmt, und
- Ausgeben (S4) eines Meldesignals (MS), wenn ein negatives Prüfergebnis ermittelt wurde (S3).

## Beschreibung

Die Erfindung betrifft ein Verfahren zum Integrationsschutz eines Gerätes sowie ein Gerät, das einen Integrationsschutz aufweist.

Geräte, insbesondere in einem Internet der Dinge oder über ein Kommunikationsnetz kommunizierende Geräte, sind mittlerweile häufig Angriffen durch unerlaubte Dritte ausgesetzt. Durch eine Manipulation des Gerätes kann das Gerät selbst geschädigt werden oder Aktionen ausführen, die zu einem Schaden bei Kommunikationspartnern führen. Daher ist der Schutz der Geräteintegrität ein wichtiges Schutzziel, insbesondere für Geräte im Internet der Dinge und ganz besonders für Geräte in industriellen Anlagen, die beispielsweise zur Herstellung von Gütern, z.B. Werkzeugmaschinen oder 3D-Drucker für eine additive Fertigung, oder zur Erzeugung und Verteilung von Energie oder auch zur Steuerung und Überwachung von Verkehrssystemen oder Gebäuden verwendet werden. Dabei kann ein Angreifer insbesondere die Firmware oder Software, insbesondere Anwendungsprogramme manipulieren, oder die Ausführung des Softwarecodes durch Ausnutzen einer Schwachstelle verändern.

Übliche Verfahren zum Schutz der Geräteintegrität sind ein sicheres Hochfahren des Geräts, auch Secure Boot genannt, ein Aktualisieren von Softwarecode durch ein sogenanntes Patchen, das Verwenden von Virenscannern, ein Installieren von Anwendungsprogrammen lediglich dann, wenn sie auf einer Positivliste aufgeführt sind, ein Auswerten von Logdaten oder auch eine Angriffserkennung durch ein sogenannte Intrusion Detection System.

Des Weiteren sind unterschiedliche Technologien zum Schutz eines Programmflusses, also einer Ablaufkontrolle der Softwareprogrammteile, bekannt. Üblicherweise wird der Programmfluss auf Übereinstimmung mit einem Kontrollflussgraphen überwacht. Dazu muss jedoch im Allgemeinen der Programmcode instrumentiert, das heißt für die Ablaufkontrolle mit Kontrollzeichen und Kontrollmaßnahmen versehen werden. Dies hat jedoch den Nachteil, dass jedes einzelne Programm beziehungsweise Anwendung mit solchen Kontrollflusszeichen ausgestattet werden muss. Dies ist insbesondere nach dem Erstellen des Programms aufwändig und schwierig.

Es ist des Weiteren ein sogenanntes Geräte-Fingerprinting bekannt, bei dem der Netzwerkverkehr eines Gerätes analysiert wird und das Gerät durch den detektierten und ausgewerteten Netzwerkverkehr identifiziert werden kann. Weiterhin ist ein so genanntes Power-Fingerprinting bekannt, bei dem die Integrität eines Gerätes anhand des Stromverbrauchs oder der elektromagnetischen Abstrahlung geprüft wird.

Des Weiteren sind Timing-Angriffe bekannt, bei denen das ermittelte Laufzeitverhalten eines Gerätes Rückschlüsse auf verwendete Daten, insbesondere kryptographische Schlüssel zulässt. Dabei spielen insbesondere das Cachespeicherverhalten und eine prädiktive Codeausführung moderner Prozessorarchitekturen eine Rolle. Ein Cachespeicher ist ein Zwischenspeicher, der die zuletzt verarbeiteten Daten und Befehle des Prozessors zwischenspeichert und so die rasche Wiederverwendung ermöglicht. Dies wird im Allgemeinen als Sicherheitsbedrohung für das Gerät angesehen, da dadurch Implementierungen kryptographischer Algorithmen angegriffen werden können.

Es ist somit die Aufgabe der vorliegenden Erfindung die Integrität von Geräten, insbesondere Internet der Dinge-Geräte und insbesondere solche Geräte in industriellen Anlagen, zuverlässig zu überwachen und somit auch eine Manipulation weiterer Geräte durch ein manipuliertes Gerät zu reduzieren.

Die Aufgabe wird durch die in den unabhängigen Ansprüchen genannten Maßnahmen gelöst. In den Unteransprüchen sind vorteilhafte Weiterbildungen der Erfindung dargestellt.

Gemäß einem ersten Aspekt betrifft die Erfindung ein Verfahren zum Integritätsschutz eines Gerätes umfassend die Verfahrensschritte:
- Erstellen eines Cachespeicherablaufprofils der Cachespeichereinheit während der Laufzeit des Geräts, wobei das Cachespeicherablaufprofil einen zeitlichen Ablauf von aufeinander folgend erfassten Cachespeicherprozessen der Cachespeichereinheit enthält,
- Ermitteln eines Prüfergebnisses durch Vergleichen des Cachespeicherablaufprofils mit mindestens einem Referenzprofil, wobei ein negatives Prüfergebnis ermittelt wird, wenn das Cachespeicherablaufprofil nicht mit dem Referenzprofil übereinstimmt, und
- Ausgeben eines Meldesignals, wenn ein negatives Prüfergebnis ermittelt wurde.

Prozessoren, die in einem elektronischen Gerät zur Ausführung von Anwendungs- oder Steuerprogrammen oder auch einem Betriebssystem eingesetzt werden und eine schnelle Datenverarbeiten benötigen, umfassen einen Cachespeicher, kurz als Cache bezeichnet. Cachespeicher sind Zwischenspeicher, die zuletzt verarbeitete Daten und Befehle zwischenspeichern und so deren rasche Wiederverwendung ermöglichen. Bei der Ausführung von Programmcode, beispielsweise eines Anwendungsprogrammes, werden eine Vielzahl von Cachespeicherprozessen ausgeführt, die zeitlich aufeinander abgestimmt und durch ein Betriebssystem gesteuert ablaufen. Die zeitlich aufeinander abgestimmten und zeitlich aufeinanderfolgend erfassten Cachespeicherprozesse werden als ein Cachespeicherablaufprofil, im englischen auch als Cache Timing Profile, bezeichnet.

Das erfindungsgemäße Verfahren ermöglicht es, indirekt anhand eines ungewöhnlichen Cachespeicherablaufprofils zu erkennen, ob ein modifiziertes oder anderes Anwendungsprogramm als vorgesehen auf dem Gerät ausgeführt wird. Weiterhin kann nicht nur erkannt werden, ob unberechtigter Programmcode ausgeführt wird, sondern auch ob der Ausführungsablauf des Programmcode verändert wurde. Somit lässt sich ein Kontrollflussintegritätsschutz realisieren, ohne den Programmcode selbst instrumentieren zu müssen, also mit Kontrollmarken und Kontrollmechanismen versehen zu müssen.

Ein Programmcode kann beispielsweise durch einen Exploit, zum Beispiel in Form eines sogenannten Return Oriented Programming ROP oder Jump Oriented Programming JOP, auf nicht vorgesehene Art verwendet wird. Ein Exploit ist dabei eine systematische Möglichkeit Schwachstellen auszunutzen, die bei der Entwicklung eines Programms entstanden sind. Dabei werden Sicherheitslücken und Fehlfunktionen von Programmen ausgenutzt, meist um sich Zugang zu Ressourcen zu verschaffen oder in Computersysteme einzudringen beziehungsweise diese zu beeinträchtigen.

In einer vorteilhaften Ausführungsform wird das Meldesignal in Form eines Log-Eintrags oder in Form eines elektronischen Fehlersignals ausgegeben.

Log-Einträge erleichtern eine Rekonstruktion eines unerwarteten Cacheverhaltens beziehungsweise eines Angriffs auf das Gerät und unterstützt somit die Erkennung und Ursachenanalyse einer Manipulation. Durch ein elektronisches Fehlersignal können kurzfristig Schutzmaßnahmen ausgelöst werden.

In einer vorteilhaften Ausführungsform löst das Meldesignal mindestens eine der nachfolgend genannten Aktionen aus: einen Geräte-Neustart, ein Löschen von Daten, insbesondere von sicherheitsrelevanten Daten, ein Aktivieren eines eingeschränkten Betriebsmodus oder ein Sperren oder ein Einschränken einer Ein-/Ausgabeschnittstelle des Geräts.

Durch einen Geräteneustart kann das Gerät insbesondere durch einen sicheren Startvorgang mittels Secure Boot in einen bekannten und möglichst nicht-manipulierten Zustand gebracht werden. Durch das Löschen von Daten können insbesondere sicherheitsrelevante Daten vor einem unerlaubten Zugriff wie beispielsweise einem Auslesen oder Verändern der Daten geschützt werden. Durch das Aktivieren eines eingeschränkten Betriebsmodus können Auswirkungen beziehungsweise Schäden durch das manipulierte Gerät reduziert oder verhindert werden. In einem eingeschränkten Betriebsmodus kann der Programmablauf vollständig blockiert werden, zulässig Wertebereichen begrenzt oder zulässig Nachrichten beschränkt werden. Durch ein Einschränken der Ein-/Ausgabeschnittstelle des Gerätes kann beispielsweise das Auslesen und Übertragen von sicherheitsrelevanten Daten aus dem Gerät verhindert werden, aber auch ein Übermitteln weiterer Schadsoftware auf das Gerät minimiert werden.

In einer vorteilhaften Ausführungsform wird das Prüfergebnis durch Anwenden eines maschinellen Klassifizierungsverfahrens auf das Cachespeicherablaufprofil ermittelt, wobei das maschinelle Klassifizierungsverfahren anhand des Referenzprofils trainiert wird.

Ein solches Referenzprofil besteht beispielsweise aus einer Vielzahl von unterschiedlichen, als nicht-manipuliert gekennzeichneten Referenzprofilen. Diese Referenzprofile werden zum Anlernen des Klassifizierungsverfahrens verwendet. Wird ein solches angelerntes maschinelles Klassifizierungsverfahren auf ein ermitteltes Cachespeicherablaufprofil angewendet, so resultiert daraus ein Wahrscheinlichkeitswert, mit dem das Cachespeicherablaufprofil mit dem Referenzprofil übereinstimmt. Das Klassifizierungsverfahren ermittelt darauf basierend ein positives oder negatives Prüfergebnis. Klassifizierungsverfahren sind bevorzugt maschinelle Lernverfahren wie beispielsweise Regressionsverfahren, Clusterverfahren oder künstliche neuronale Netze.

In einer vorteilhaften Ausführungsform werden für verschiedene Softwareprogramme jeweils mindestens ein Softwareprogramm-spezifisches Referenzprofil bereitgestellt.

Somit kann dediziert festgestellt werden, in welchem Softwareprogramm eine Unregelmäßigkeit vorliegt beziehungsweise eine Manipulation stattgefunden hat.

In einer vorteilhaften Ausführungsform wird ein Meldesignal dann ausgegeben, wenn für mindestens ein vorgegebenes Softwareprogramm ein vorgegebenes Maß an Übereinstimmung zwischen dem Cachespeicherablaufprofil und dem mindestens einen Softwareprogramm-spezifischen Referenzprofil und somit ein positives Prüfergebnis ermittelt wird.

Dadurch kann insbesondere überwacht werden, ob ein spezielles Softwareprogramm auf dem Gerät tatsächlich ausgeführt wird, beispielsweise eine Sicherheitssoftware wie beispielsweise ein Host-basiertes Eindringungs-Detektionssystem IDS oder ein Virusscanner. Dadurch lässt sich eine häufig als Watchdog-Funktionalität bezeichnete Überwachungsfunktion realisieren.

In einer vorteilhaften Ausführungsform wird jeweils ein Referenzprofil pro Gerätetyp bereitgestellt.

Somit kann die Integritätsüberwachung einer Vielzahl von einzelnen Geräteexemplaren über ein einziges Referenzprofil durchgeführt werden. Dies reduziert den Aufwand auf eine Erstellung eines oder weniger Referenzprofile. Dies erlaubt eine kosteneffiziente Integritätsüberwachung insbesondere für Geräte, die einen eingeschränkten und/oder fest vorgegebenen Funktionsumfang haben. Unterschiedliche Referenzprofile können dabei beispielsweise abhängig von einem Firmwarestand eines Gerätetyps erstellt und eingesetzt werden.

In einer vorteilhaften Ausführungsform wird ein Referenzprofil spezifisch für ein einzelnes Geräteexemplar bereitgestellt.

Somit kann die Integrität eines beispielsweise sicherheitsrelevanten Gerätes sehr detailliert und genau auf die implementierten und erlaubten Softwareprogramme begrenzten Funktionsumfang überwacht werden.

In einer vorteilhaften Ausführungsform wird ein Referenzprofil abhängig von der Konfiguration des Geräts und/oder abhängig von der Nutzung des Gerätes und/oder abhängig von einem aktivierten Betriebsmodus des Geräts ausgewählt und zur Prüfung verwendet.

Dies erlaubt es die Konfiguration, die vorgegebene Nutzung des Geräts oder auch den aktivierten Betriebsmodus des Geräts zu überwachen.

In einer vorteilhaften Ausführungsform wird das mindestens eine Referenzprofil in einem Testbetrieb auf dem Gerät selbst, auf einem mit dem Gerät baugleichen anderen Gerät oder durch eine Simulation des Cachespeicherprozesses ermittelt.

Wird das Referenzprofil in einem Testbetrieb auf dem Gerät erstellt, so wird das Referenzprofil anschließend auf dem gleichen Gerät zum Schutz dieses Geräts eingesetzt. Das Referenzprofil wird im Testbetrieb des Geräts und bevorzugt in einer speziellen Testumgebung angelernt. Dabei werden die Ein-/Ausgabeschnittstellen des Geräts mit Testmustern beaufschlagt. Das Referenzprofil kann somit nach dem Herstellungsprozess oder auch bei der Inbetriebnahme des Geräts in einem Testbetrieb ermittelt werden. Das Referenzprofil kann aber auch während der Entwicklung des Geräts beziehungsweise während Entwicklung der auf dem Gerät ablaufenden Softwareprogramme auf einem baugleichen Gerät ermittelt werden. Ein durch eine Simulation des Cachespeicherprozesses des Gerätes ermitteltes Referenzprofil kann zeitlich unabhängig von der Entwicklung des Gerätes oder der zu überwachenden Softwareprogramme und ohne das Vorhandensein eines realen Gerätes ermittelt werden.

In einer vorteilhaften Ausführungsform werden während der Laufzeit des Geräts das Erstellen des Cachespeicherablaufprofils und das Ermitteln des Prüfergebnisses kontinuierlich oder automatisch in vorgegebenen Zeitintervallen oder auf Anforderung ausgeführt. Dabei wird also eine Folge von Cachespeicherablaufprofilen ermittelt. Es kann überprüft werden, dass jedes ermittelte Cachespeicherablaufprofil mit zumindest einem Eintrag einer Liste zulässiger Referenzprofile hinreichend übereinstimmt. Falls dies nicht der Fall ist, ist das Prüfergebnis negativ. In einer alternativen Variante kann überprüft werden, ob die Häufigkeit von Cachespeicherablaufprofilen, die mit der Liste zulässiger Referenzprofile übereinstimmt, oberhalb eines Schwellwerts liegt. Dazu werden Cachespeicherablaufprofile über ein Zeitfenster, z.B. 100ms oder 10s, ermittelt. Wenn das Ergebnis unterhalb eines Schwellwerts liegt, ist das Prüfergebnis negativ. In einer weiteren Variante wird überprüft, ob die Folge von ermittelten Cachespeicherablaufprofilen mit einem Referenzprofil übereinstimmt, das zulässige Folgen von Cachespeicherablaufprofilen vorgibt. Dies ist insbesondere bei Geräten, auf denen ein Echtzeitbetriebssystem mit einer deterministischen Zeitplanerstellung (Scheduling) von Software-Prozessen oder Software-Tasks verwendet wird.

Bei einem kontinuierlichen Erstellen und Ermitteln können insbesondere Geräte mit sicherheitskritischen Funktionen permanent überwacht werden und somit eine auftretende Änderung des Cachespeicherablaufprofils zeitnah detektiert werden. Bei einer automatisch in vorgegebenen Zeitintervallen ausgeführten Verfahrensschritten können je nach Sicherheitsrelevanz und auch abhängig von der Prozessorkapazität des Gerätes Zeitintervalle, nach denen das Verfahren ausgeführt werden, eingestellt werden. So kann ein periodisches Zeitintervall oder auch unregelmäßige Zeitintervalle vorgesehen werden. Insbesondere ist das Durchführen des Verfahrens auf Anforderung nach Eintritt eines besonderen Ereignisses sinnvoll.

In einer vorteilhaften Ausführungsform wird das Erstellen des Cachespeicherablaufprofils und Ermitteln des Prüfergebnisses jeweils zum Zeitpunkt eines Wechsels von einem ersten Softwareprozess zu einem zweiten Softwareprozess durchgeführt und ein Referenzprofil des zweiten Softwareprozesses für das Vergleichen des Cachespeicherablaufprofils ausgewählt.

Dies ermöglicht ein automatisches Anpassen des Referenzprofils bei einem Wechsel von einem ersten zu einem zweiten Softwareprozess, beispielsweise beim Aufruf beziehungsweise Starten eines neuen Softwareprogramms.

In einer vorteilhaften Ausführungsform ist das mindestens eine Referenzprofil innerhalb des Geräts abgespeichert und das Prüfergebnis wird durch das Gerät selbst ermittelt.

Dies ermöglicht es dem Gerät, selbständig das Referenzprofil beispielsweise bei einem Softwareprogrammwechsel anzupassen und damit die eigene Geräteintegritätsprüfung weiterzuführen.

In einer vorteilhaften Ausführungsform ist das mindestens eine Referenzprofil auf einem Server außerhalb des Gerätes abgespeichert und das Cachespeicherablaufprofil wird vom Gerät zum Server übermittelt und der Server sendet das ermittelte Prüfergebnis an das Gerät zurück.

Dies ermöglicht es, das Prüfergebnis zentral in einem Server für eine Mehrzahl von Geräten zu ermitteln. Dadurch kann beispielsweise für einfache Geräte, deren Verarbeitungskapazität das Vergleichen und Erstellen eines Prüfergebnisses und Speichern des Referenzprofils nicht erlauben, ein Integritätsschutz durchgeführt werden. Zum anderen kann das mindestens eine auf dem Server bereitgestellte oder auch gespeicherte Referenzprofil einfach aktualisiert oder ausgetauscht werden.

Ein zweiter Aspekt der Erfindung betrifft ein Gerät mit Integritätsschutz umfassend:
- eine Detektionseinheit, die derart ausgebildet ist, ein Cachespeicherablaufprofil der Cachespeichereinheit während der Laufzeit des Geräts zu erstellen, wobei das Cachespeicherablaufprofil einen zeitlichen Ablauf von aufeinanderfolgend erfassten Cachespeicherprozessen der Cachespeichereinheit enthält,
- eine Prüfeinheit, die derart ausgebildet ist, ein Prüfergebnis durch Vergleichen des Cachespeicherablaufprofils mit mindestens einem Referenzprofil zu überprüfen, wobei ein negatives Prüfergebnis ermittelt wird, wenn das Cachespeicherablaufprofil nicht mit dem Referenzprofil übereinstimmt, und
- eine Meldeeinheit, die derart ausgebildet ist, ein Meldesignal auszugeben, wenn ein negatives Prüfergebnis ermittelt wird.

Ein solches Gerät kann eigenständig einen Integritätsschutz durchführen. Dabei kann die Integrität des Gerätes basierend auf den im Gerät ablaufenden Anwendungsprogrammen, aber auch dem Betriebssystem als spezielles Softwareprogramm, überwacht werden. Das Gerät erkennt dabei auch eine Änderung im Ablauf des Programms, so dass eine Integrität des Kontrollflusses damit realisiert ist. Das Gerät kann ein Gerät ohne eine Verbindung zu einem Kommunikationsnetz sein. Das Gerät kann aber auch mit einem Kommunikationsnetz verbunden sein und darüber mit Kommunikationspartnern Daten austauschen.

Ein dritter Aspekt der Erfindung betrifft ein Computerprogrammprodukt, umfassend ein nichtflüchtiges, computerlesbares Medium, das direkt in den Speicher eines digitalen Computers ladbar ist, umfassend Programmcodeteile, die dazu geeignet sind, die Schritte des beschriebenen Verfahrens durchzuführen.

Sofern es in der nachfolgenden Beschreibung nicht anders angegeben ist, beziehen sich die Begriffe "Erstellen", "Ermitteln", "Ausgeben" und dergleichen vorzugsweise auf Handlungen und/oder Prozesse und/oder Verarbeitungsschritte, die Daten verändern und/oder erzeugen und/oder die Daten in andere Daten überprüfen, wobei die Daten insbesondere als physikalische Größen dargestellt werden und vorliegen können. Insbesondere sollte der Ausdruck "Gerät" und "Computer" möglichst weit ausgelegt werden, um insbesondere alle elektronischen Geräte mit Datenverarbeitungseigenschaften abzudecken. Eine jeweilige "Einheit", beispielsweise eine "Detektionseinheit", "Prüfungseinheit", "Ausgabeeinheit" kann hardwaretechnisch und/oder softwaretechnisch implementiert sein.

Bei einer hardwaretechnischen Implementierung kann die jeweilige Einheit als Vorrichtung oder als Teil einer Vorrichtung, zum Beispiel als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Ausführungsbeispiele des erfindungsgemäßen Verfahrens beziehungsweise der erfindungsgemäßen Vorrichtung sind in den Zeichnungen beispielhaft dargestellt und werden anhand der nachfolgenden Beschreibung näher erläutert.

Es zeigen:
- Figur 1: ein Ausführungsbeispiel eines erfindungsgemäßen Gerätes mit Integritätsschutz in Blockdarstellung;
- Figur 2: ein Ausführungsbeispiel des erfindungsgemäßen Verfahrens als Ablaufdiagramm; und
- Figur 3: ein Anwendungsszenario des erfindungsgemäßen Verfahrens mit einem externen Server, der das Ermitteln des Prüfergebnisses durchgeführt, in schematischer Darstellung.

In den Figuren sind einander entsprechende Teile mit den gleichen Bezugszeichen versehen.

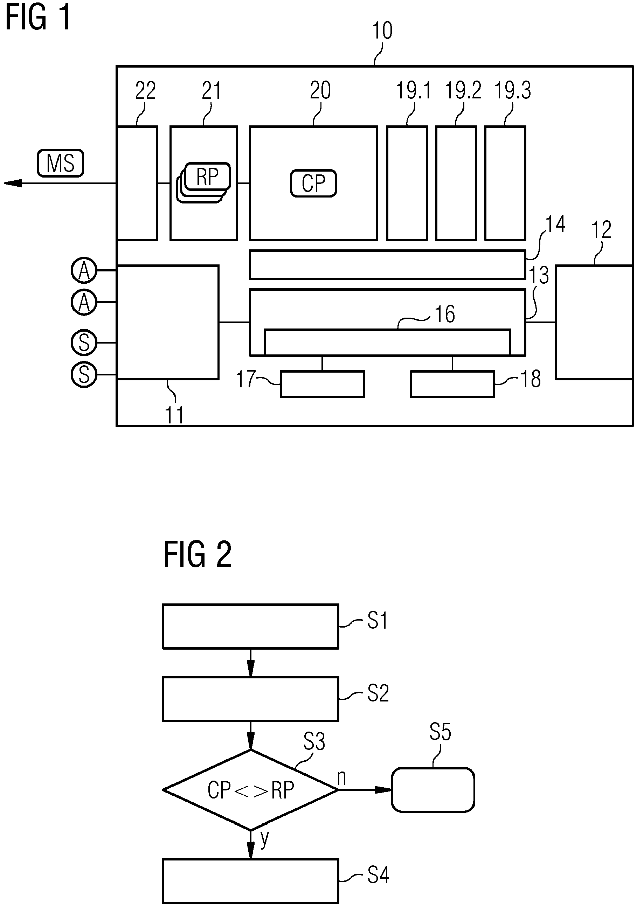

Figur 1 zeigt ein Gerät 10, beispielsweise ein Internet der Dinge-Gerät, das Daten über ein Kommunikationsnetz mit anderen Geräten oder Komponenten austauscht. Das Gerät 10 umfasst eine Ein-/Ausgabeschnittstelle 11, über die Zusatzkomponenten wie beispielsweise Sensoren oder Aktoren S, A verbunden sind. Des Weiteren umfasst das Gerät 10 eine Netzwerkschnittstelle 12, über die das Gerät 10 mit dem Kommunikationsnetz verbindbar ist. Die Ein-/Ausgabeschnittstelle 11 und die Netzwerkschnittstelle 12 sind mit einer Recheneinheit 13, beispielsweise einem Prozessor und insbesondere einer zentralen Prozessoreinheit verbunden, auf der ein Betriebssystem 14 ausgeführt wird. Das Betriebssystem 14 führt eine Zeitplanerstellung und Steuerung für mehrere Anwendungsprogramme 19.1, 19.2, 19.3 durch. Dadurch werden die mehreren Anwendungsprogramme 19.1, 19.2, 19.3 zeitlich wechselweise ausgeführt. Anwendungsprogramme 19.1, 19.2, 19.3 können bei eine Recheneinheit 13 mit mehreren Kernen auch parallel ausgeführt werden.

Die Recheneinheit 13 ist über eine interne Cachespeichereinheit 16, insbesondere einen Last Level Cache, mit externen Speichereinheiten 17, 18, wie beispielsweise einem Flashspeicher oder einer RAM (Random Access Memory) Speichereinheit, verbunden.

Allgemein kann die Cachespeichereinheit 16 mehrstufig organisiert sein. Die Cachespeichereinheit 16 dient als Zwischenspeicher, damit die Recheneinheit 13 schneller auf Speicherinhalte der externen Speichereinheiten 17, 18 zugreifen kann. Die Zugriffsgeschwindigkeit hängt davon ab, ob ein Speicherinhalt bereits in der Cachespeichereinheit 13 zwischengespeichert ist oder ob er von der externen Speichereinheit 17, 18 gelesen werden muss oder ein veränderter Speicherinhalt in die externen Speichereinheiten 17, 18 zurückgeschrieben werden muss.

Cachespeicherprozesse werden von einer Cachespeichereinheit 16 wiederholt erfasst, um ein zeitliches Profil des Cachespeicherablaufs zu ermitteln. Ein Cachespeicherablaufprofil CP ist somit ein zeitlicher Ablauf von aufeinanderfolgend erfassten Cachespeicherprozessen der Cachespeichereinheit 16. Eine Detektionseinheit 20 kann beispielsweise als spezielles Anwendungsprogramm softwaretechnisch ausgebildet sein. das Ermittelte Cachespeicherablaufprofil CP wird im dargestellten Beispiel einer separaten Prüfeinheit 21 bereitgestellt. Die Prüfeinheit 21 prüft, ob eine Übereinstimmung des Cachespeicherablaufprofils CP mit einem oder mit mehreren Referenzprofilen RP vorliegt. Ermittelt die Prüfeinheit 21 ein negatives Ergebnis, das heißt das übermittelte Cachespeicherablaufprofil weicht vom Referenzprofil ab, wird durch eine Meldeeinheit 22 ein Meldesignal MS bereitgestellt.

Der Vergleich des Cachespeicherablaufprofils CP kann auf der Prüfeinheit 21 und somit auf dem Gerät 10 selbst oder in einer separaten von Gerät 10 abgesetzten Komponente, wie beispielsweise einem Server, erfolgen. In einem solchen Fall wird das erstellte Cachespeicherablaufprofil CP über die Netzwerkschnittstelle 12 an den Server übermittelt, das Prüfergebnis über die Netzwerkschnittstelle 12 vom Server empfangen und durch die Prüfeinheit 21 aus dem vom Server empfangenen Datenstrom ermittelt.

Eine Firmware des Gerätes 10 umfassend die Applikationen 19.1, 19.2, 19.3 kann fest vorgegeben und unverändert, das heißt als ein integriertes Image vorliegen. Es ist jedoch auch möglich, einzelne Anwendungsprogramme nach zu installieren, beispielsweise in Form eines Container-Images. In diesem Fall ist es möglich, dass ein oder mehrere Referenzprofile abhängig von den auf dem Gerät 20 installierten Anwendungsprogrammen 19.1, 19.2, 19.3 ausgewählt werden. Auch ist es möglich, dass manche Anwendungsprogramme 19.1, 19.2, 19.3 nicht dauerhaft ausgeführt werden, sondern nur bei bestimmten Ereignissen angestoßen werden. Hier ist es vorteilhaft, die Referenzprofile RP abhängig von einer Liste von ablaufenden Prozessen auszuwählen.

Anhand der Figur 2 wird nun das vorgeschlagene Integritätsschutz-Verfahren genauer beschrieben.

In einem ersten Verfahrensschritt S1 wird ein Cachespeicherablaufprofil CP der Cachespeichereinheit, beispielsweise Cachespeichereinheit 16 des Gerätes 10 aus Figur 1, erstellt. Ein Cachespeicherablaufprofil CP enthält einen zeitlichen Ablauf von aufeinander folgenden erfassten Cachespeicherprozessen der Cachespeichereinheit 16. Das Cachespeicherablaufprofil CP kann dabei kontinuierlich, in vorgegebenen zeitlichen Abständen oder auf Anforderung ermittelt werden. Ein solches Ermitteln eines Cachespeicherprofils CP wird auch als "Cache-Profiling" bezeichnet. In einer Variante kann ein Hardwarebasierter Zeitgeber in festen zeitlichen Abständen einen Interrupt auslösen, um ein Cachespeicherablaufprofil CP durch eine Interrupt-Programmroutine zu ermitteln.

Anschließend wird überprüft, ob das Cachespeicherablaufprofil CP mit dem Referenzprofil RP übereinstimmt. Ein negatives Prüfergebnis wird ermittelt, wenn das Cachespeicherablaufprofil CP nicht mit dem Referenzprofil RP übereinstimmt.

Im Verfahrensschritt S3 wird explizit die Entscheidung über die nachfolgende Aktion basierend auf dem Prüfergebnis dargestellt. Liegt ein negatives Prüfergebnis vor, siehe den mit y gekennzeichneten Pfeil, wird der Verfahrensschritt S4 ausgeführt, bei dem ein Meldesignal ausgegeben wird. Liegt kein negatives Prüfergebnis vor, wird anschließend, siehe Pfeil n das Verfahren beendet. Siehe Verfahrensschritt S5.

Das mindestens eine Referenzprofil RP enthält ebenfalls einen zeitlichen Ablauf von aufeinanderfolgend erfassten Cachespeicherprozessen. Das Referenzprofil RP wird jedoch nicht im laufenden Betrieb der Cachespeichereinheit 16 ermittelt, sondern beispielsweise in einem Probebetrieb desselben Gerätes 10, in dem nachfolgenden zur Laufzeit des Geräts 10 das Verfahren durchgeführt wird. Ein solcher Testbetrieb kann beispielsweise nach der Herstellung des Gerätes oder vor der Inbetriebnahme des Gerätes 10 durchgeführt werden und dabei das mindestens eine Referenzprofil erstellt werden.

Das mindestens eine Referenzprofil RP wird dem Gerät 10 bereitgestellt, beispielsweise in einem persistenten Speicher des Gerätes 10 abgespeichert. Das Referenzprofil RP kann dem Gerät 10 aber auch durch eine zum Gerät 10 externe Vorrichtung bereitgestellt werden und der Vergleich im Gerät selbst durchgeführt und das Prüfergebnis ermittelt werden. Das Referenzprofil RP kann aber auch auf einem mit dem Gerät 10 baugleichen anderen Gerät oder durch eine Simulation des Cachespeicherprozesses ermittelt werden und dem Gerät wie oben beschrieben bereitgestellt werden.

Das Gerät 10 ermittelt ein Prüfergebnis kontinuierlich oder automatisch in vorgegebenen Zeitintervallen oder auf Anforderung. Insbesondere wird ein Cachespeicherablaufprofil CP zum Zeitpunkt, an dem ein Wechsel von einem ersten Softwareprozess zu einem zweiten Softwareprozess durchgeführt wird, erstellt. Bei einem solchen Wechsel, beispielsweise von einem ersten zu einem zweiten Anwendungsprogramm, finden gehäuft Cachespeicherzugriffe statt, die somit ein aussagekräftiges Profil liefern. Ein bei einem solchen Wechsel erstelltes Cachespeicherablaufprofil CP wird mit einem Referenzprofil RP, das entweder den Wechsel vom ersten zum zweiten Softwareprozess selbst abdeckt, ausgewählt oder es wird ein Referenzprofil RP des zweiten Softwareprozesses für das Vergleichen mit dem Cachespeicherablaufprofil CP ausgewählt.

Wie schon genannt, kann jeweils ein Softwareprogramm-spezifisches Referenzprofil RP für jedes unterschiedliche Softwareprogramm bereitgestellt und bei Laufzeit eines dieser Softwareprogramme das entsprechende Softwareprogrammspezifische Referenzprofil RP zur Ermittlung des Prüfergebnisses ausgewählt werden. Es kann jedoch auch lediglich ein Referenzprofil RP für alle Geräte eines Gerätetyps bereitgestellt werden. Somit wird dieses Gerätetyp-spezifische Referenzprofil RP in einer Vielzahl von Geräten des entsprechenden Gerätetyps verwendet werden. Alternativ kann jedoch auch ein für ein einzelnes Geräteexemplar spezifisches Referenzprofil RP bereitgestellt werden.

Ein solches Referenzprofil RP kann wiederum aus einer Vielzahl von Referenzprofilen bestehen, die beispielsweise jeweils ein Softwareprogramm ausgeführt auf diesem spezifischen Geräteexemplar charakterisieren. Ein Softwareprogramm-spezifisches Referenzprofil, ein Gerätetyp-spezifisches Referenzprofil und auch ein Geräteexemplar-spezifisches Referenzprofil kann wiederum abhängig von der Konfiguration des Gerätes 10 und/oder abhängig von der Nutzung des Gerätes 10 und/oder abhängig von einem aktivierten Betriebsmodus des Gerätes 10 ausgewählt und zur Prüfung verwendet werden. Somit können auch Abweichungen im Verhalten des Geräts 10 beziehungsweise im Verhalten der Prozessoreinheit 13 des Gerätes erkannt und gemeldet werden.

Das Verfahren kann auch als Watchdog-Funktion zur Überwachung des Gerätes 10 verwendet werden. Dabei wird ein Meldesignal dann ausgegeben, wenn für mindestens ein vorgegebenes Softwareprogramm der Vergleich zwischen dem Cachespeicherablaufprofil CP und dem mindestens einen Software-spezifischen Referenzprofil RP ein positives Prüfergebnis ermittelt wird. Bei einem Referenzprofil RP, das ein gesamtes Gerät 10 abdeckt, kann die entsprechende Watchdog-Funktion sich über das Aktivsein des ganzen Gerätes 10 erstrecken. Somit können durch das Verfahren unterschiedliche Funktionen oder auch Hierarchien von Funktionen beziehungsweise das gesamte Gerät 10 bezüglich Aktivität überprüft werden.

Das Prüfergebnisses wird bevorzugt durch Anwenden eines maschinellen Lernverfahrens, insbesondere eines maschinellen Klassifizierungsverfahrens, auf das Cachespeicherablaufprofil CP ermittelt werden. Als maschinelles Klassifizierungsverfahren kann beispielsweise ein Supportvektormaschine, ein gestapelter Auto-Encoder, auch Stacked Autoencoders genannt, oder auch ein konvolutionales Neuronales Netz verwendet werden. Damit ein solches maschinelles Klassifizierungsverfahren ein aktuell ermitteltes Cachespeicherablaufprofil CP bezüglich dem Referenzprofil RP vergleichen beziehungsweise klassifizieren kann, wird das maschinelle Klassifizierungsverfahren anhand des mindestens einen Referenzprofils trainiert. Dabei wird aus einer Vielzahl von als normal oder manipuliert und somit integritätsverletzt gekennzeichneten Referenzprofilen RP das maschinelle Klassifizierungsverfahren angelernt und somit spezifisch auf das Referenzprofil RP trainiert. Ein Klassifizierungsverfahren kann dabei auf eine Vielzahl von unterschiedlichen Referenzprofilen trainiert sein, wobei jeweils durch ein Referenzprofil RP eine Klasse oder Gruppe angelernt wird.

Im laufenden Betrieb des Geräts wird dann das ermittelte Cachespeicherablaufprofil CP als Eingabewert dem Klassifizierungsverfahren bereitgestellt und vom Klassifizierungsverfahren dann einer der Klassen beziehungsweise Gruppen zugeordnet oder als keiner Gruppe zugehörend ermittelt. Die Gruppenzugehörigkeit wird dabei bei einem Überschreiten eines Wahrscheinlichkeitsgrenzwertes ermittelt. Wird beispielsweise die Zugehörigkeit des Cachespeicherablaufprofils CP zu einem bestimmten Referenzprofil RP ermittelt, so kann ein Aktivitätssignal für eine Watchdog-Funktion ausgegeben werden, die einen aktiven Prozess des entsprechenden Softwareprogramms signalisiert. Kann jedoch das Cachespeicherablaufprofil CP keinem der Referenzprofile RP zugeordnet werden, wird ein negatives Prüfergebnis ermittelt und ein Meldesignal MS ausgegeben.

In einem Log-Eintrag und in einem elektrischen Fehlersignal kann weitere Information, beispielsweise zur Art oder Größe der Abweichung vom Referenzprofil RP enthalten sein.
Durch das Meldesignal MS kann beispielsweise ein Geräteneustart oder ein Löschen von Daten oder ein Sperren oder Einschränken einer Ein-/Ausgabeschnittstelle des Gerätes, beispielsweise der Netzwerkschnittstelle 12 oder der Sensorschnittstelle 11 ausgelöst werden. Es kann auch ein eingeschränkter Betriebsmodus aktiviert werden.

Anstatt das Prüfergebnis im Gerät zu ermitteln, kann das Gerät das ermittelte Cachespeicherablaufprofil CP an einen externen Server übermitteln. In dem Server wird dann anschließend das Prüfergebnis ermittelt und an das Gerät zurückgesendet und dort empfangen und anhand des Prüfergebnisses entschieden, ob ein Meldesignal ausgegeben wird.

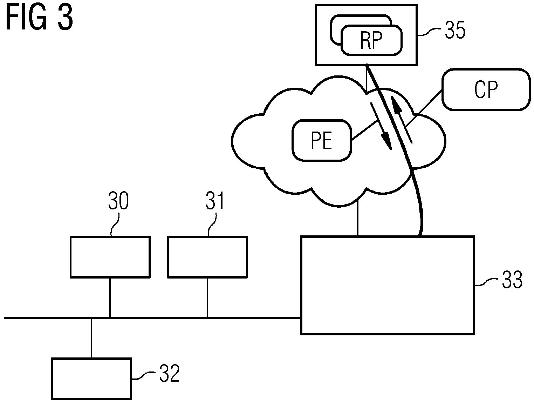

Figur 3 zeigt ein solches Szenario, in dem mehrere Geräte, 30, 31, 32, 33 in einem Kommunikationsnetz miteinander verbunden sind. Das Gerät 33 ermittelt ein Cachespeicherablaufprofil CP und sendet dieses beispielsweise über einen Netzwerkschnittstelle 12 an einen Server 35. Der Server 35 umfasst mindestens ein Referenzprofil RP sowie eine Funktionalität zum Ermitteln eines Prüfergebnisses PE. Das Prüfergebnis PE wird zurück an das Gerät 33 übermittelt. Im Server 35 kann das mindestens eine Referenzprofil RP für weitere Geräte, beispielsweise Gerät 30, 31, 32 ebenfalls zur Prüfung derer Cachespeicherablaufprofile verwendet werden. Bei einer Aktualisierung eines oder mehrerer Softwareprogramme des Geräts auf eine neue Version können die Referenzprofile RP im Server 35 entsprechend aktualisiert werden. Durch eine solche zentrale Aktualisierung im Server kann das aktualisierte Referenzprofil für alle Geräte mit dem aktualisierten Softwareprogramm verwendet werden.

Durch das beschriebene Verfahren können Manipulationen an einem Gerät, insbesondere in einem im industriellen Netzwerk eingesetzten Gerät oder Steuergerät, erkannt werden. Entsprechend können frühzeitig Gegenmaßnahmen, wie beispielsweise ein Neustart des Geräts oder ein Ändern des Betriebsmodus veranlasst werden, so dass ein Schaden durch ein manipuliertes Gerät auf die industrielle Anlage reduziert werden kann. Durch ein frühzeitiges Erkennen einer Manipulation eines Gerätes kann somit auch eine Weiterverbreitung von Schadsoftware durch ein solches Gerät reduziert werden. Insbesondere können manipulierte Programmcodes, die Schwachstellen durch beispielsweise einen Exploit ausnutzen, indirekt anhand eines veränderten Cachespeicherablaufprofils erkannt werden. Dadurch ist auch ein Schutz vor Manipulation des Kontrollflusses vorhandener Programmcodes möglich. Der beschriebene Ansatz ist relativ einfach umsetzbar. Insbesondere muss der Programmcode selbst nicht instrumentiert werden und es wird kein Zugriff auf spezielle Performanceregister benötigt. Das Verfahren kann insbesondere bei relativ einfachen, eingebetteten Geräten mit fester Funktionalität eingesetzt werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum Integritätsschutz eines Gerätes (10) umfassend die Verfahrensschritte:
- Erstellen (S1) eines Cachespeicherablaufprofils (CP) einer Cachespeichereinheit (20) während der Laufzeit des Geräts (10), wobei das Cachespeicherablaufprofil (CP) einen zeitlichen Ablauf von aufeinanderfolgend erfassten Cachespeicherprozessen der Cachespeichereinheit (16) enthält,
- Ermitteln (S2) eines Prüfergebnisses durch Vergleichen des Cachespeicherablaufprofils (CP) mit mindestens einem Referenzprofil (RP), wobei ein negatives Prüfergebnis ermittelt wird, wenn das Cachespeicherablaufprofil (CP) nicht mit dem Referenzprofil (RP) übereinstimmt, und
- Ausgeben (S4) eines Meldesignals (MS), wenn ein negatives Prüfergebnis ermittelt wurde (S3).

2. Verfahren nach Anspruch 1, wobei das Meldesignal (MS) in Form eines Log-Eintrags oder in Form eines elektrischen Fehlersignals ausgegeben wird.

3. Verfahren nach einem der vorangehenden Ansprüche, wobei das Meldesignal (MS) mindestens eine der nachfolgenden Aktionen von ein Geräte-Neustart, ein Löschen von Daten, insbesondere von sicherheitsrelevanten Daten, ein Aktivieren eines eingeschränkten Betriebsmodus oder ein Sperren oder Einschränken einer Ein-/Ausgabeschnittstelle des Geräts (10), auslöst.

4. Verfahren nach einem der vorangehenden Ansprüche, wobei das Prüfergebnis durch Anwenden eines maschinellen Klassifizierungsverfahren auf das Cachespeicherablaufprofil (CP) ermittelt wird, wobei das maschinelle Klassifizierungsverfahren anhand des Referenzprofils (RP) trainiert wird.

5. Verfahren nach einem der vorangehenden Ansprüche, wobei für verschiedene Softwareprogramme jeweils mindestens ein Softwareprogramm-spezifisches Referenzprofil (RP) bereitgestellt werden.

6. Verfahren nach Anspruch 5, wobei ein Meldesignal (MS) dann ausgegeben wird, wenn für mindestens ein vorgegebenes Softwareprogramm ein vorgegebenes Maß an Übereinstimmung zwischen dem Cachespeicherablaufprofil (CP) und dem mindestens einen Softwareprogramm-spezifisches Referenzprofil (RP) und somit ein positives Prüfergebnis ermittelt wird.

7. Verfahren nach einem der vorangehenden Ansprüche, wobei jeweils ein Referenzprofil (RP) pro Gerätetyp bereitgestellt wird.

8. Verfahren nach einem der vorangehenden Ansprüche, wobei ein Referenzprofil (RP) spezifisch für ein einzelnes Geräteexemplar bereitgestellt wird.

9. Verfahren nach einem der vorangehenden Ansprüche, wobei ein Referenzprofil (RP) abhängig von der Konfiguration des Gerätes (10) und/oder abhängig von der Nutzung des Geräts (10) und/oder abhängig von einem aktivierten Betriebsmodus des Geräts (10) ausgewählt und zur Prüfung verwendet wird.

10. Verfahren nach einem der vorangehenden Ansprüche, wobei das mindestens eine Referenzprofil (RP) in einem Testbetrieb auf dem Gerät (10) selbst, auf einem mit dem Gerät (10) baugleichen anderen Gerät oder durch eine Simulation des Cachespeicherprozesses ermittelt wird.

11. Verfahren nach einem der vorangehenden Ansprüche, wobei während der Laufzeit des Gerätes (10) das Erstellen des Cachespeicherablaufprofils (CP) und das Ermitteln des Prüfergebnisses kontinuierlich oder automatisch in vorgegebenen Zeitintervallen oder auf Anforderung ausgeführt werden.

12. Verfahren nach einem der vorangehenden Ansprüche, wobei das Erstellen des Cachespeicherablaufprofils (CP) und Ermitteln des Prüfergebnisses jeweils zum Zeitpunkt eines Wechsels von einem ersten Softwareprozess zu einem zweiten Softwareprozess durchgeführt wird, und ein Referenzprofil (RP) des zweiten Softwareprozesses für das Vergleichen des Cachespeicherablaufprofils (CP) ausgewählt wird.

13. Verfahren nach einem der vorangehenden Ansprüche, wobei das mindestens eine Referenzprofil (RP) innerhalb des Gerätes (10) abgespeichert ist und das Prüfergebnis durch das Gerät ermittelt wird.

14. Verfahren nach einem der vorangehenden Ansprüche, wobei das mindestens eine Referenzprofil (RP) auf einem Server (35) außerhalb des Geräts (10) abgespeichert ist, und das Cachespeicherablaufprofil (CP) vom Gerät (10) zum Server (35) übermittelt wird und der Server (35) das Prüfergebnisses (PE) ermittelt und das Prüfergebnis (PE) an das Gerät (10) zurücksendet.

15. Gerät mit Integritätsschutz umfassend:
- eine Detektionseinheit (20), die derart ausgebildet ist, ein Cachespeicherablaufprofil (CP) einer Cachespeichereinheit (16) während der Laufzeit des Geräts (10) zu erstellen, wobei das Cachespeicherablaufprofil (CP) einen zeitlichen Ablauf von aufeinanderfolgend erfassten Cachespeicherprozessen der Cachespeichereinheit (16) enthält,
- eine Prüfeinheit (21), die derart ausgebildet ist, ein Prüfergebnis (PE) durch Vergleichen des Cachespeicherablaufprofils mit mindestens einem Referenzprofil (RP) zu überprüfen, wobei ein negatives Prüfergebnis (PE) ermittelt wird, wenn das Cachespeicherablaufprofil (CP) nicht mit dem Referenzprofil (RP) übereinstimmt, und
- eine Meldeeinheit (22), die derart ausgebildet ist, ein Meldesignal (MS) auszugeben, wenn ein negatives Prüfergebnis (PE) ermittelt wird.

16. Computerprogrammprodukt, umfassend ein nicht flüchtiges, Computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 14 durchzuführen.
